# EUROPÄISCHE PATENTSCHRIFT

(11) **EP 1 705 775 B1**
(45) Veröffentlichungstag und Bekanntmachung des Hinweises auf die Patenterteilung: **20.12.2006**
(21) Anmeldenummer: 05005796.7
(22) Anmeldetag: 17.03.2005
(51) Int. Cl.: H02K 3/52

(54) **Stator für eine elektrische Maschine**
Stator for an electrical machine
Stator pour machine électrique

(43) Veröffentlichungstag der Anmeldung: 27.09.2006
(73) Patentinhaber: ZF FRIEDRICHSHAFEN AG, 88046 Friedrichshafen (DE)
(72) Erfinder: Vollmuth, Alfons, 97456 Dittelbrunn-Hambach (DE); Jafoui, Khalid, 96191 Trunstadt (DE); van Heyden, Marcus, 97456 Dittelbrunn (DE)

(56) Entgegenhaltungen:
- DE-A1- 10 152 006
- DE-A1- 19 920 127
- US-A1- 2003 090 166
- US-A1- 2004 051 417
- US-A1- 2004 256 936
- PATENT ABSTRACTS OF JAPAN Bd. 2003, Nr. 12, 5. Dezember 2003 (2003-12-05) & JP 2003 333789 A (HONDA MOTOR CO LTD), 21. November 2003 (2003-11-21)

## Beschreibung

Die Erfindung betrifft einen Stator für eine elektrische Maschine gemäß dem Oberbegriff des Patentanspruchs 1.

Bekannte Statoren für elektrische Maschinen weisen ein Statorjoch mit einer Anzahl von Statorzähnen auf, welche die elektrische Wicklung bspw. in Form von einzelnen, aus einem Isolierdraht gewickelten Statorspulen tragen. Die Spulen sind mit ihren beiden Spulenenden einzelnen Strängen zugeordnet und untereinander in einer vorbestimmtem Weise über gemeinsame Verbindungsleiter verschaltet. Im Fall einer Drehstrommaschine weist der Stator drei Stränge und damit zumindest drei Verbindungsleiter auf, die jeweils um 120° phasenversetzt mit Strom beaufschlagt werden. Die Verbindungsleiter werden zum Anschluss der elektrischen Maschine an eine Stromquelle einem Schaltkasten zugeführt.

Die DE 199 20 127 C2 offenbart einen Stator für eine elektrische Maschine, bei der die Verschaltungsanordnung elektrisch isolierte Verbindungsleiter aufweist, die konzentrisch zueinander zugeordnet sind. Die Anschlüsse für die Enden der Statorspulen sind an den Verbindungsleitern als von diesen abstehende Anschlussfortsätze ausgebildet, wobei für jedes Spulenende ein separater Anschlussfortsatz vorgesehen ist und durch die dort realisierte radiale Staffelung der Verbindungsleiter sich gleichfalls unterschiedliche Radiallagen für die Verbindungsstellen ergeben. Die elektrische Verbindung kann hierbei durch eine Fügetechnik, bspw. Schweißen, Löten und/oder einfaches Umwickeln der Anschlussfortsätze realisiert werden. Die Verbindungsleiter stützen sich gegenseitig und am Stator durch zwischen diese eingelegte Isoliermittelstreifen ab.

Die Herstellung einer Schweiß- oder Lötverbindung ist sehr arbeitsintensiv und daher mit hohen Kosten verbunden. Des weiteren besteht der Nachteil, dass die zum Verbinden eingebrachte Prozesswärme zu einer Schädigung der Isolation zwischen den Verbindungsleitern und der Isolation der Wickeldrähte im Bereich der Spulen führen kann. Dadurch kann es sehr schnell zu unerwünschten elektrischen Kurzschlüssen kommen, welche die Funktion der elektrischen Maschine beeinflussen und sogar zum Ausfall dieser führen können. Des Weiteren hebt eine Beschädigung der zwischen den Verbindungsleitern angeordneten Isolation die Lagefixierung der Verbindungsleiter auf. Diese sind damit nicht mehr betriebssicher am Stator angeordnet. Vibrationen, die beim Betreiben der elektrische Maschine auftreten oder von außerhalb auf diese einwirken führen zu einer mechanischem Wechselbelastung der elektrischen Verbindungen der Maschine, welche sich innerhalb einer kurzen Zeit lösen können. Das Umwickeln der Anschlussfortsätze stellt einen typischen Handarbeitsschritt dar, welcher einer Effizienzsteigerung bei der Herstellung solcher Statoren hindernd im Wege steht. Bei der Verschaltung der Spulen eines Stators ist wegen der relativ großen Anzahl von Spulenenden die Gefahr von Fehlschaltungen wegen fehlerhafter Zuordnungen zu den Verbindungsleitern erheblich. Trotz größter Sorgfalt kann diesbezüglich bei der Fertigung von Statoren keine 100%ige Sicherheit erzielt werden.

In der DE 101 52 006 A1 wird ein gattungsgemäßer Stator mit einer Verschaltungsanordnung beschrieben, wobei die Verbindungsleiter radial zueinander angeordnet sind und an vorbestimmten Positionen axial abstehende Anschlüsse zur Kontaktierung mit den Enden der Statorspulen aufweisen. An den Wickelkörpern der Statorspulen sind pro Spulenende eine der Anzahl der Verbindungsleiter entsprechende Anzahl von Aufnahmeelementen ausgebildet, wobei zur Kontaktierung ein Spulenende zunächst durch alle Aufnahemeelemente hindurchgeführt wird und durch Einführen eines dieser Anschlüsse zwischen dem jeweiligen Spulenenden und diesem Verbindungsleiter eine elektrische Klemmverbindung ausgebildet wird. Alternativ zu den mit den Verbindungsleitern ausgeführten abstehenden Anschlüssen, können an diesen auch separate Steckkontakte aufgesteckt werden und in jeweils ein Aufnahmeelement zur Ausbildung einer Klemmverbindung mit einem Spulenende eingeführt werden.

Das heißt, dass bei einer Verschaltungsanordnung mit drei Verbindungsleitern die Spulenenden zwar zunächst über alle Aufnahmeelemente abgelängt werden müssen, jedoch anschließend pro Spulenende jeweils zwei Aufnahmeelemente nicht genutzt werden und unbesetzt bleiben. Zudem wird bei der dort dargestellten radialen Anordnung der Verbindungsleiter die axiale Baubreite vergrößert, weil von den Aufnahmeelementen nur die axial abstehenden Anschlüsse, nicht jedoch die Verbindungsleiter selbst aufgenommen werden. Daraus ergibt sich der Nachteil, dass die Verbindungsleiter am Stator gegenüber Vibrationen und Umwelteinflüssen relativ ungeschützt angeordnet sind.

Es ist die Aufgabe der vorliegenden Erfindung, einen Stator der vorgenannten Art konstruktiv so zu verbessern, dass insbesondere dessen Verschaltungsanordnung prozesssicher hergestellt werden kann und wobei die Verbindungsleiter und die Kontaktstellen der Spulenenden am Stator geschützt angeordnet sind.

Die Erfindung löst diese Aufgabe durch einen gattungsgemäßen Stator, der zusätzlich die im Kennzeichen des Patentanspruchs 1 aufgeführten Merkmale aufweist. Vorteilhafte Ausgestaltungen der Erfindungen sind in den Unteransprüchen wiedergegeben.

Die Ausbildung einer Tragestruktur mit einem Aufnahmebereich zur Aufnahme der Verbindungsleiter ermöglicht einerseits die betriebssichere Fixierung der Verbindungsleiter am Stator. Andererseits kann durch einen gegenüber den Verbindungsleitern isolierten Verschaltungsbereich, der ebenfalls an der Tragestruktur ausgebildet ist, eine übersichtliche Anordnung der miteinander zu verschaltenden Elemente erfolgen. Somit wird durch diese Ausgestaltung eine raumsparende Struktur bereitgestellt, die gleichfalls die Voraussetzung für eine nachfolgende fehlerfreie Verschaltung schafft.

Mit besonderem Vorteil können die Spulenenden und die Anschlusselemente nur an räumlich vorbestimmten Positionen in den Verschaltungsbereich hineinragen, wo diese zur weiteren Verschaltung bereitstehen.

Eine stabile und weitestgehend nach außen abgeschlossene Verschaltungsanordnung kann erreicht werden, indem der Aufnahmebereich und der Verschaltungsbereich als einseitig offene Nuten ausgeführt sind. Ein noch besserer Schutz gegenüber äußeren Einflüssen, bsp. Staub und Feuchtigkeit, kann durch das Abdichten des Aufnahmebereichs und/oder des Verschaltungsbereichs mit einem Dichtmittel erreicht werden, welches den offenen Ringraum ausfüllt und die Kontaktbereiche darin einbettet.

Mit Vorteil ist die Tragestruktur zur Erzielung möglichst kurzer Leiterverbindungen zwischen den Spulenenden und den Verbindungsleitern unmittelbar an den Spulenwickelkörpern angeordnet, wodurch betriebsbedingte Vibrationen der elektrischen Maschine insbesondere an den Kontaktbereichen der Verschaltungsanordung deutlich reduziert werden können. Die Tragestruktur kann aus einzelnen Segmenten gebildet werden, die jeweils integral mit den Wickelkörpern ausgeführt sind oder alternativ dazu von den Wickelkörpern separat, bspw. als ein Ringelement geformt sein.

Die Verschaltung der Spulenenden erfolgt in einer besonders vorteilhaften Variante mittels Leiterbrückenelementen, welche bevorzugt als dünnwandige Blechstreifen ausgeführt sind nur in einer vorgegebenen Lage bzw. Ausrichtung am Verschaltungsbereich angeordnet werden können, wobei günstigerweise die Verbindung der Spulenenden und der Anschlusselemente mit den Leiterbrückenelemente als Klemmverbindung ausgeführt ist. Dieses ermöglicht in mehrfacher Hinsicht eine schnelle und vor allem fehlerfreie Verschaltung der elektrischen Maschine.

Mit besonderem Vorteil hinsichtlich einer automatisierten Durchführung des Verschaltungsvorganges sind die Kontaktbereiche der Spulenenden mit den Verbindungsleitern auf einer gemeinsamen Axial- und Radiallage angeordnet, wobei jeweils zwei am Umfang benachbarte Enden von jeweils zwei Spulen mittels eines gemeinsamen Anschlusselements ein und demselben Verbindungsleiter zugeordnet sind.

Die Erfindung wird im Folgenden mittels der beigefügten Figuren anhand eines Ausführungsbeispiels erläutert. Es zeigen:
- Fig. 1: eine Perspektivdarstellung eines mit Einzelspulen bestückten Stators und mit einer daran angeordneten Verschaltungsanordnung,
- Fig. 2: ein Ausschnitt eines ringkreisförmigen Verbindungsleiters mit seitlichen Anschlusselementen zur Verbindung mit Spulenenden,

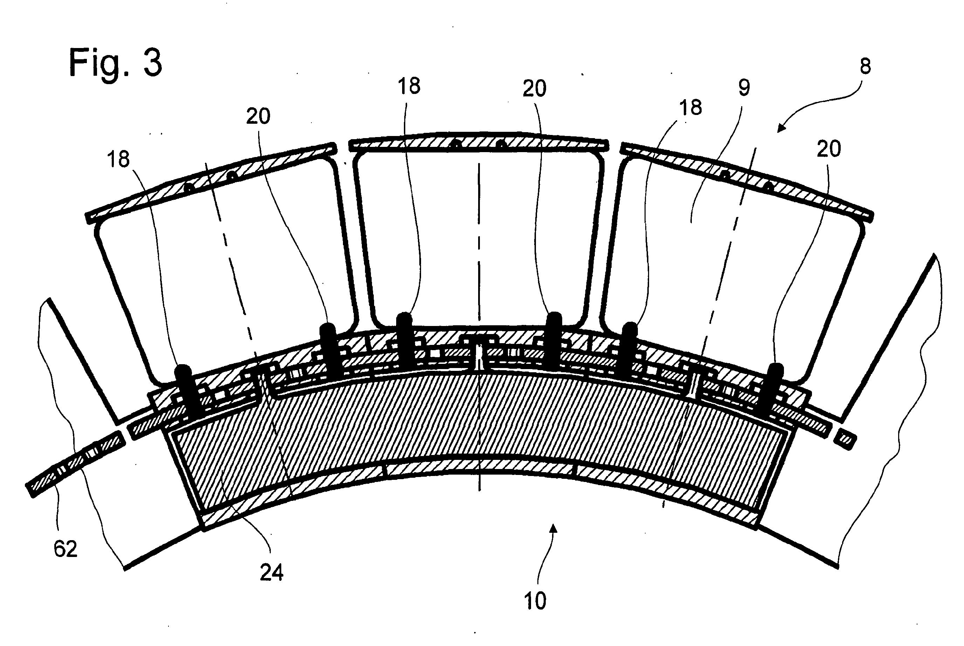

- Fig. 3: ein Radialschnitt des in Fig. 1 dargestellten Stators in der Austrittsebene der Spulenenden,
- Fig. 4: ein Wickelkörper mit einem daran ausgebildeten Aufnahmeraum zur Aufnahme von Verbindungsleitern,
- Fig. 5a,b: eine Darstellung eines Leiterbrückenelementes zur Verbindung von Spulenenden mit einem Verbindungsleiter.

Die Figuren zeigen einen Ausschnitt eines Stators 10 für eine zeichnerisch nicht weiter dargestellte elektrische Maschine mit einem ringförmigen, aus lamellierten Elektroblech bestehendem Statorjoch 4. Es handelt sich hierbei um einen Stator einer permanenterregten elektrischen Synchronmaschine in Außenläuferbauart, jedoch ist die spezielle Bauart der elektrischen Maschine für die weiteren Erläuterungen unerheblich. Das Satorjoch 4 weist in Umfangsrichtung eine Anzahl von radial nach außen gerichteten Zähnen 6 auf, welche mit Einzelspulen 8 bestückt sind. Die Spulen 8 bestehen aus einer Wicklung 9 eines einzelnen oder eines mehradrigen Leiters, wobei dessen Einzelleiter untereinander verdrillt sein können.

Die Einzelspulen 8 wurden in einem vorherigen Fertigungsschritt mit Hilfe von jeweils zwei aus einem Isoliermaterial bestehenden Wickelkörpern 12 separat gewickelt und anschließend über die Zähne 6 des Statorjochs 4 geschoben und dort mittels einer Rastverbindung gegen Verrutschen gesichert. Jede Spule 8 weist zwei Spulenenden 18, 20 auf, welche an einer gemeinsamen Stirnseite des Stators 10 aus den Spulen 8 radial innen herausgeführt sind und zur gemeinsamen Verschaltung bereitstehen. Die Spulen 8 sind einzelnen elektrischen Strängen zugeordnet und werden, wie weiter unten noch ausgeführt, über gemeinsame Verbindungsleiter 24, 26, 28, welche Bestandteil einer Verschaltungsanordnung sind 14, in einer vorbestimmten Weise miteinander verschaltet. Dazu sind die Verbindungsleiter 24, 26, 28 zueinander koaxial und axial gestaffelt am Stator 10, radial innerhalb der Spulen 8 angeordnet. Zur gegenseitigen Isolation der Verbindungsleiter 24, 26, 28 sind zwei, zwischen diesen angeordnete Isolierscheiben 38 vorgesehen.

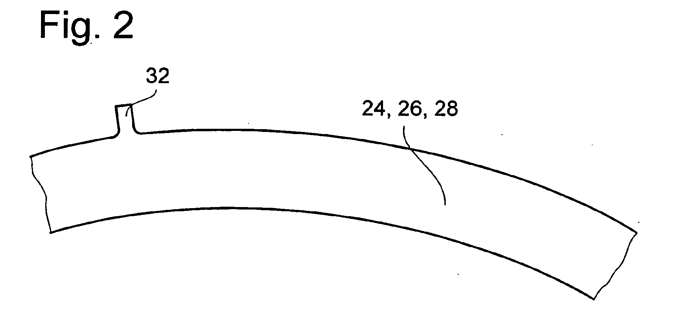

Gemäß der Darstellung in Fig. 2 sind die Verbindungsleiter 24, 26, 28 als ringförmig, bspw. durch Hochkantrollieren in einer Ebene, gebogene Streifenleiter z.B. aus Kupfer ausgeführt. Zur Verbindung mit den Spulenenden 18, 20 dienen mehrere, am Umfang an vorbestimmten Positionen innerhalb der Erstreckungsebene nach radial außen abstehende fahnenförmige Anschlusselemente 32, von denen in Fig. 2 nur ein einziges abgebildet ist.

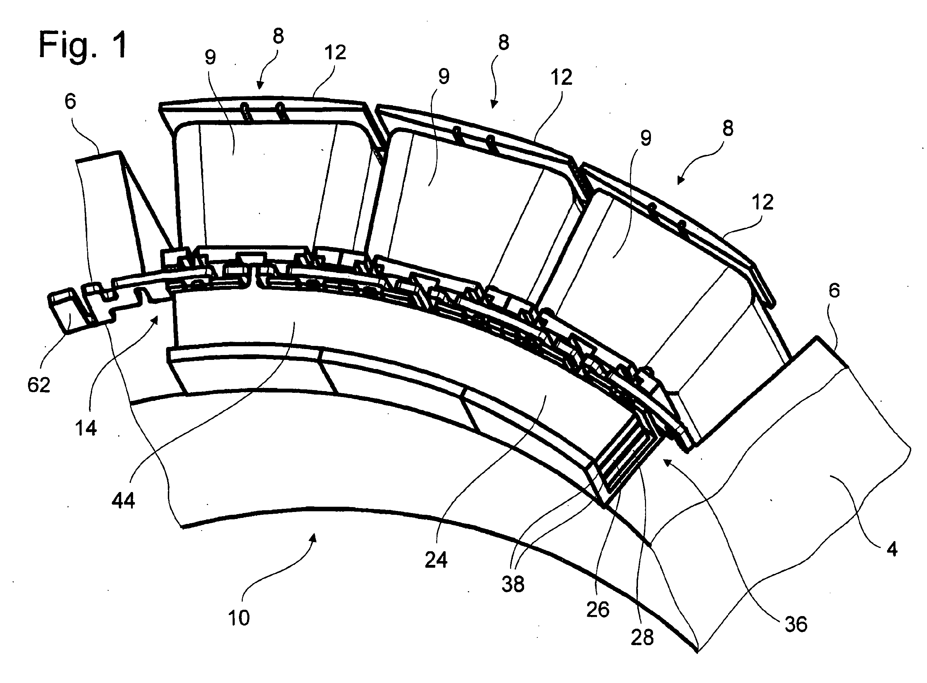

Die Verbindungsleiter 24, 26, 28 sind am Stator in einen als einseitig offene Nut ausgeführten Aufnahmebereich 44 einer dort angeordneten Tragestruktur 36 eingelegt. Die Tragestruktur 36 ist, wie in Fig. 1 dargestellt, segmentweise zusammengesetzt, indem Einzelsegmente integral mit den Wickelkörpern 12 ausgebildet sind, welche im Zusammenwirken am Stator eine geschlossene Ringstruktur ausbilden.

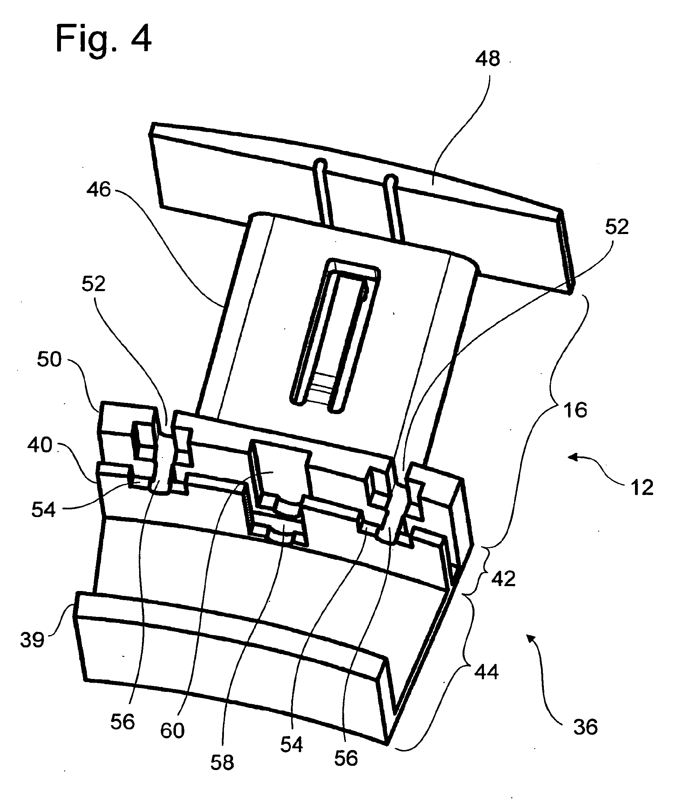

Die in Fig. 4 dargestellten Wickelkörper 12 weisen auf der die Verschaltungsanordnung 14 bildenden Statorseite zunächst einen üblicherweise zur Aufnahme der Wicklung 9 vorgesehenen Wickelbereich 16 auf, der von einem am Statorjoch 4 anliegenden Basisbereich 46 und zwei davon seitlich abstehenden Schenkeln 48, 50 gebildet wird. Zur Bildung eines Segments der Tragestruktur 36 ist der Basisbereich 46 in Bezug auf die Anordnung an der elektrischen Maschine nach radial innen verlängert und sind weiter zwei von davon in axialer Richtung abstehende Stege 39, 40 ausgebildet. Dadurch wird ein unmittelbar an den Wickelbereich 16 angrenzender einseitig offener, nutförmiger Verschaltungsbereich 42 und ein ebenfalls einseitig offener Aufnahmebereich 44 zur Aufnahme der Verbindungsleiter 24, 26, 28 geformt.

Der Schenkel 50 und der Steg 40 umfassen jeweils zwei radial ausgerichtete Ausnehmungen 52, 54 zum Hindurchführen und zur Aufnahme der Spulenenden 18, 20, welche sich im Verschaltungsbereich 42 an darin angegossenen Anlagebereichen 56 abstützen können. Eine weitere Ausnehmung 58 dient dem Hindurchführen der Anschlusselemente 32 von dem Aufnahmebereich 44 in den Verschaltungsbereich 42, deren Endabschnitte dort von einer innerhalb des Schenkels 50 gebildeten Ausnehmung 60 formschlüssig aufgenommen werden. Somit ist sichergestellt, dass die Spulenenden und die Anschlusselemente nur an räumlich vorbestimmten Positionen in den Verschaltungsbereich hineinragen können und dort zur weiteren Verschaltung bereitstehen.

Alternativ zu der dargestellten segmentweise aufgebauten Tragestruktur 36 kann diese auch als separater Kunststoffring ausgeführt und an den Wickelkörpern 12 fixiert werden, wobei der Verschaltungsbereich 42 wahlweise entweder zu einem Wickelkörper 12 oder zu der Tragestruktur 36 oder zu beiden zugehörig ausgebildet werden kann.

Im Ausführungsbeispiel sind die radial ausgerichteten Anschlusselemente 32 in Umfangsrichtung am Stator 4 zwischen den beiden Enden 18, 20 einer Spule 8 angeordnet. Die Anschlusselemente 32 können sich jedoch auch zwischen zwei Spulenenden 18, 20 benachbarter Spulen 8 befinden.

Zur Verschaltung der Spulenenden 18, 20 werden diese zunächst am Wickelkörper 12 nach radial innen abgewinkelt und in die dafür vorgesehenen Ausnehmungen 52, 54 am Verschaltungsbereich 42 eingelegt, wobei gleichzeitig die Anlage an den Anlagebereichen 56 erfolgt. Die Kontaktierung eines Anschlusselementes 32 eines Verbindungsleiters 24, 26, 28 mit Spulenenden 18, 20 von jeweils zwei benachbarten Spulen 8 erfolgt mit jeweils einem aus einem dünnwandigen Blechstreifen gefertigten in Fig. 5a dargestellten Leiterbrückenelement 62, welches zwischen zwei Spulen in den Verschaltungsbereich 42 eingesteckt wird. An diesem sind zwei von derselben Seite ausgehende Schlitze 64 zur Aufnahme von zwei benachbarten Spulenenden 18, 20 von jeweils zwei benachbarten Spulen 8 und ein weiterer, von der Gegenseite ausgehender Schlitz 66 zur Aufnahme eines Anschlusselementes 32 ausgebildet. Zur Erzielung einer gewissen Elastizität der Verschaltungsanordnung 14 zum Ausgleich einer Wärmedehnung und zur Verminderung des Einflusses von betriebsbedingten Vibrationen an den Spulenenden 18, 20 ist das Leiterbrückenelement 62 mit einer zusätzlichen Dehnungsstruktur 68 in Form von Ausnehmungen versehen.

Beim Einstecken des Leiterbrückenelementes 62 werden die Spulenenden 18, 20 in die Schlitze 64 gepresst und mittels dieser als Schneidklemmen wirkenden Schlitzkanten verklemmt.

Danach werden die bezüglich der Anschlusselemente 32 in Umfangsrichtung versetzten Verbindungsleiter 24, 26, 28 sowie die Isolierscheiben 38 in die Kammer 44 eingelegt, wobei jeweils nur ein einziges Anschlusselement 32 eines der Verbindungsleiter 24, 26, 28 durch eine Ausnehmung 58 in den Verschaltungsbereich 42 eingeführt wird und von dem dort liegenden Schlitz 66 des Verbindungselementes 62 ebenfalls klemmend aufgenommen werden.

Die Leiterbrückenelemente 62 sind durch eine geeignete Wahl der Abstände der Schlitze 64, 66 so gestaltet, dass diese nur in einer vorgegebenen Lage bzw. Ausrichtung am Verschaltungsbereich 42 angeordnet werden können. Damit wird sichergestellt, dass jeweils zwei am Umfang benachbarte Enden 18, 20 von jeweils zwei Spulen 8 mittels eines gemeinsamen Anschlusselements 32 ein und demselben Verbindungsleiter 24, 26, 28 zugeordnet und Kurzschlüsse von jeweils zwei Enden 18, 20 ein und derselben Spule 8 vermieden werden. Insgesamt sind auf diese Weise alle Kontaktbereiche der Spulenenden 18, 20 mit den Leiterbrückenelementen 62 und mit den Anschlußelementen 32 auf einer gemeinsamen Radiallage und ebenfalls auf einer im wesentlichen gemeinsamen Axiallage angeordnet. Daraus ergibt sich der Vorteil, dass beim Einstecken eines Leiterbrückenelements 62 zwei Spulenenden 18, 20 gleichzeitig mit einem der Verbindungsleiter verbunden werden.

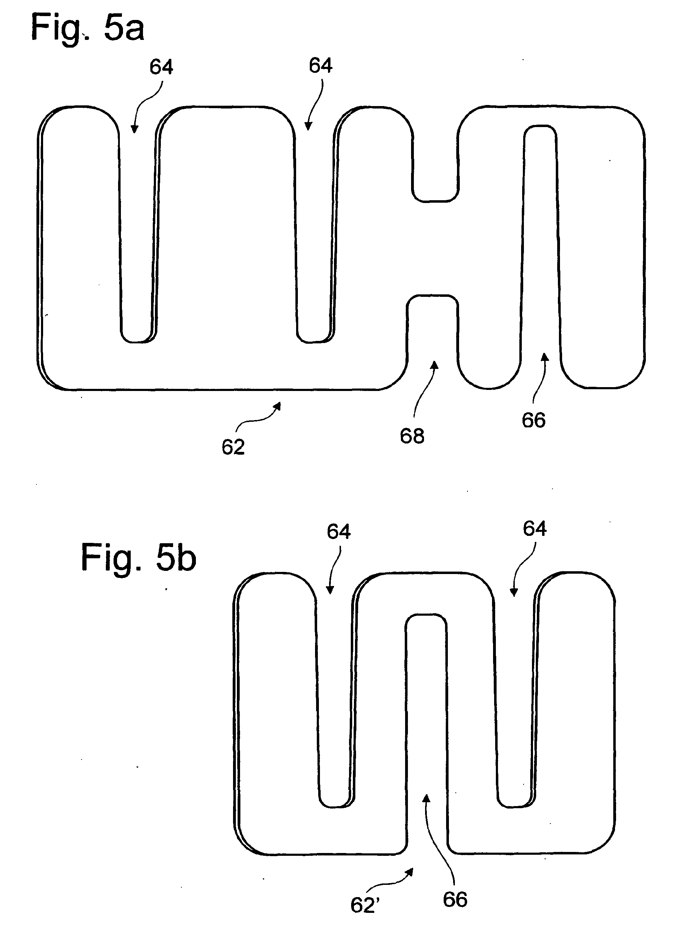

Wenn alternativ zu dem erläuterten Beispiel die Anschlusselemente 32 zwischen zwei Spulenenden 18, 20 benachbarter Spulen 8 angeordnet werden, so kann ein entsprechendes Leiterbrückenelement 62' wie Fig. 5b zeigt wesentlich kompakter gestaltet werden, wobei gleichfalls eine hohe mechanische Flexibilität ohne die Ausbildung meiner zusätzlichen Dehnungsstruktur gegeben ist.

Zum Schutz der Verbindungsleiter 24, 26, 28 und der Kontaktbereiche 40 vor Korrosionserscheinungen und zur Erhöhung der Stabilität der Verschaltungsanordnung 16 kann der Verschaltungsbereich 42 und/oder der Aufnahmebereich 44 mit einem Dichtmittel vergossen werden, wobei die Verbindungsleiter 24, 26, 28 und die Kontaktbereiche der Leiterbrückenelemente 62 vollständig gegenüber der Umgebung gekapselt sind.

### Bezugszeichenliste

- 2: Statornabe
- 4: Statorjoch
- 6: Zahn
- 8: Spule
- 9: Wicklung
- 10: Stator
- 12: Wickelkörper
- 14: Verschaltungsanordnung
- 18, 20: Spulenenden
- 24, 24, 28: Verbindungsleiter
- 32: Anschlußelement
- 36: Tragestruktur
- 38: Isolierscheibe
- 39, 40: Steg
- 42: Verschaltungsbereich
- 44: Aufnahmebereich
- 46: Basisbereich
- 48,50: Schenkel
- 52, 54: Ausnehmung
- 56: Anlagebereich
- 58: Ausnehmung
- 60: Ausnehmung
- 62, 62': Leiterbrückenelement
- 64, 66: Schlitz

## Patentansprüche

1. Stator (10) für eine elektrische Maschine mit einem Statorjoch (4), an dem eine Anzahl von Statorspulen (8) angeordnet ist, welche mit deren Spulenenden (18, 20) zur Verschaltung mit einer Verschaltungsanordnung (14) vorgesehen sind und wobei die Verschaltungsanordnung (14) elektrisch gegeneinander isolierte Verbindungsleiter (24, 26, 28) aufweist, die über Anschlusselemente (32) mit den Enden der Statorspulen unter Ausbildung elektrischer Kontaktbereiche verbunden sind,
**dadurch gekennzeichnet,**
**dass** die Verbindungsleiter (24, 26, 28) in einem Aufnahmebereich (44) einer am Stator (10) angeordneten Tragestruktur (36) angeordnet sind, wobei diese weiterhin einen von den Verbindungsleitern (24, 26, 28) isolierten Verschaltungsbereich (42) aufweist, in welchen die Spulenenden (18, 20) und die Anschlusselemente (32) zur Verschaltung hineinragen.

2. Stator gemäß Anspruch 1,
**dadurch gekennzeichnet,**
**dass** die Spulenenden (18, 20) und die Anschlusselemente (32) an räumlich vorbestimmten Positionen in den Verschaltungsbereich hineinragen.

3. Stator gemäß Anspruch 1 oder 2,
**dadurch gekennzeichnet,**
**dass** der Aufnahmebereich (44) und der Verschaltungsbereich (42) als einseitig offene Nuten ausgeführt sind:

4. Stator gemäß einem der Ansprüche 1 -3,
**dadurch gekennzeichnet,**
**dass** der Aufnahmebereich (44) und/oder der Verschaltungsbereich (42) mit einem Dichtmittel abgedichtet sind.

5. Stator gemäß einem der Ansprüche 1-4,
**dadurch gekennzeichnet,**
**dass** die Spulen (8) von Wickelkörpern (12) getragen werden und die Tragestruktur (36) an den Wickelkörpern (12) angeordnet ist.

6. Stator gemäß einem der Ansprüche 1-5 ,
**dadurch gekennzeichnet,**
**dass** die Verbindung der Spulenenden (18, 20) mit den Anschlusselementen (32) durch innerhalb des Verschaltungsbereichs (42) angeordnete Leiterbrückenelemente (62, 62') erfolgt.

7. Stator gemäß Anspruch 6,
**dadurch gekennzeichnet,**
**dass** die Leiterbrückenelemente (62, 62') nur in einer vorbestimmten Lage am Verschaltungsbereich (42) angeordnet werden können.

8. Stator gemäß Anspruch 6 oder 7,
**dadurch gekennzeichnet,**
**dass** die Verbindung der Spulenenden (18, 20) und der Anschlusselemente (32) mit den Leiterbrückenelementen (62, 62') als Klemmverbindung ausgeführt ist.

9. Stator gemäß einem der Ansprüche 6-8,
**dadurch gekennzeichnet,**
**dass** die Leiterbrückenelemente (62, 62') als dünnwandige Blechstreifen ausgeführt sind.

10. Stator gemäß Anspruch einem der Ansprüche 1-9,
**dadurch gekennzeichnet,**
**dass** die Kontaktbereiche der Spulenenden (18, 20) mit den Verbindungsleitern (24, 26, 28) auf einer gemeinsamen Axial- und Radiallage angeordnet sind, wobei jeweils zwei am Umfang benachbarte Enden (18, 20) von jeweils zwei Spulen (18, 20) mittels eines gemeinsamen Anschlusselements (32) ein und demselben Verbindungsleiter (24, 26, 28) zugeordnet sind.

## Claims

1. Stator (10) for an electrical machine having a stator yoke (4) on which a number of stator coils (8) are arranged, whose coil ends (18, 20) are intended to be connected to a connection arrangement (14), and with the connection arrangement (14) having connection conductors (24, 26, 28) which are electrically isolated from one another and are connected via connecting elements (32) to the ends of the stator cores, forming electrical contact areas, **characterized in that** connection conductors (24, 26, 28) are arranged in a holding area (44) of a supporting structure (36) which is arranged on the stator (10) and also has a connection area (42) which is isolated from the connection conductors (24, 26, 28) and into which the coil ends (18, 20) and the connecting elements (32) project for connection.

2. Stator according to Claim 1, **characterized in that** the coil ends (18, 20) and the connecting elements (32) project into the connection area at spatially predetermined positions.

3. Stator according to Claim 1 or 2, **characterized in that** the holding area (44) and the connection area (42) are in the form of grooves which are open on side.

4. Stator according to one of Claims 1-3, **characterized in that** the holding area (44) and/or the connection area (42) are/is sealed by a sealing means.

5. Stator according to one of Claims 1-4, **characterized in that** the coils (8) are supported by winding formers (12), and the supporting structure (36) is arranged on the winding formers (12).

6. Stator according to one of Claims 1-5, **characterized in that** the coil ends (18, 20) are connected to the connecting elements (32) by means of conductor linking elements (62, 62') which are arranged within the connection area (42).

7. Stator according to Claim 6, **characterized in that** the conductor linking elements (62, 62') can be arranged only in a predetermined position on the connection area (42).

8. Stator according to Claim 6 or 7, **characterized in that** the coil ends (18, 20) and the connecting elements (32) are connected to the conductor linking elements (62, 62') in the form of a terminal connection.

9. Stator according to one of Claims 6-8, **characterized in that** the conductor linking elements (62, 62') are in the form of thin-walled sheet-metal strips.

10. Stator according to one of Claims 1-9, **characterized in that** the contact areas of the coil ends (18, 20) are arranged together with the connection conductors (24, 26, 28) in a common axial and radial position, with in each case two ends (18, 20) (which are adjacent on the circumference) of in each case two coils (18, 20) being associated with one and the same connection conductor (24, 26, 28) by means of one common connecting element (32).

## Revendications

1. Stator (10) pour une machine électrique avec une culasse de stator (4), sur laquelle sont disposées plusieurs bobines de stator (8), pourvues à leurs extrémités (18, 20) d'un agencement de connexion (14) pour l'interconnexion, l'agencement de connexion (14) comportant des conducteurs de connexion (24, 26, 28) isolés les uns par rapport aux autres et reliés avec les extrémités des bobines de stator par des éléments de raccordement (32) grâce des zones de contact électrique,
**caractérisé en ce que**
les conducteurs de connexion (24, 26, 28) se trouvent dans la zone d'admission (44) d'une structure de support (36) qui est placée sur le stator (10) et qui comporte en outre une zone de connexion (42) isolée des conducteurs de connexion (24, 26, 28), dans laquelle s'introduisent les extrémités de bobines (18, 20) et les éléments de raccordement (32) servant à la connexion.

2. Stator selon la revendication 1,
**caractérisé en ce que**
les extrémités de bobines (18, 20) et les éléments de raccordement (32) s'introduisent dans 1a zone de connexion suivant une disposition spatiale prédéterminée.

3. Stator selon la revendication 1 ou 2,
**caractérisé en ce que**
la zone d'admission (44) et la zone de connexion (42) sont conçues comme des rainures ouvertes unilatéralement.

4. Stator selon l'une des revendications 1 à 3,
**caractérisé en ce que**
la zone d'admission (44) et/ou la zone de connexion (42) sont colmatées avec un joint d'étanchéité.

5. Stator selon l'une des revendications 1 à 4,
**caractérisé en ce que**
les bobines (8) sont portées par des cônes d'enroulement (12) et **en ce que** la structure de support (36) est disposée sur les cônes d'enroulement (12).

6. Stator selon l'une des revendications 1 à 5,
**caractérisé en ce que**
le raccordement des extrémités de bobines (18, 20) est réalisé grâce aux éléments de raccordement (32) à l'aide d'éléments de ponts conducteurs (62, 62') situés à l'intérieur de la zone de connexion (42).

7. Stator selon la revendication 6,
**caractérisé en ce que**
les éléments de ponts conducteurs (62, 62') ne peuvent être disposés dans la zone de connexion (42) que dans une certaine position prédéterminée.

8. Stator selon la revendication 6 ou 7,
**caractérisé en ce que**
le raccordement des extrémités de bobines (18, 20) et des éléments de raccordement (32) avec les éléments de ponts conducteurs (62, 62') est réalisé sous forme de carcan.

9. Stator selon l'une des revendications 6 à 8,
**caractérisé en ce que**
les éléments de ponts conducteurs (62, 62') sont conçus comme des bandes de tôle à mince paroi.

10. Stator selon l'une des revendications 1 à 9,
**caractérisé en ce que**
les zones de contact sur les extrémités de bobines (18, 20) sont dans la même position axiale et radiale que les conducteurs de connexion (24, 26, 28), les deux extrémités adjacentes (18, 20) de deux bobines (18, 20) correspondantes sur la périphérie étant attribuées à un même conducteur de connexion (24, 26, 28) au moyen d'un élément de raccordement commun (32).
